# FASCICULE DE BREVET EUROPEEN

(11) **EP 3 572 238 B1**
(45) Date de publication et mention de la délivrance du brevet: **27.12.2023**
(21) Numéro de dépôt: 19170683.7
(22) Date de dépôt: 23.04.2019
(51) Int. Cl.: B60B 27/02, B60B 27/00

(54) **MOYEU POUR ROUE DE CYCLE**
NABE FÜR EIN FAHRRADRAD
HUB FOR CYCLE WHEEL

(30) Priorité: 22.05.2018 FR 1800491
(43) Date de publication de la demande: 27.11.2019
(73) Titulaire: Mavic Group, 74650 Chavanod (FR)
(72) Inventeur: VEUX, Jean-Luc, 74960 Annecy (FR); PETIT-LAURENT, Arnaud, 74700 Sallanches (FR)
(74) Mandataire: Innovincia

(56) Documents cités:
- EP-A1- 1 121 255
- EP-A1- 2 177 373
- EP-A2- 0 887 207
- EP-B1- 1 121 255
- EP-B1- 2 177 373
- DE-U1-202018 001 877
- US-A1- 2006 043 786

## Description

La présente invention concerne un moyeu pour roue de cycle. Plus particulièrement, la présente invention concerne les bouchons d'axe qui sont placés aux deux extrémités de l'axe central du moyeu et qui viennent en appui contre le cadre ou la fourche du vélo lorsque la roue est fixée au vélo.

Il est connu dans l'art antérieur de placer simplement des bouchons d'extrémité en les glissant sur l'axe ou à l'intérieur de celui-ci. Le document DE 10 2010 033 272 montre notamment un moyeu ayant deux bouchons d'extrémité glissés sur l'axe traversant du moyeu. Lorsque la roue est fixée au vélo, les bouchons sont naturellement maintenus en place car pris entre les montants du cadre, respectivement les bras de la fourche. En revanche, lorsque la roue est retirée du vélo et qu'elle est manipulée par l'utilisateur, il est important que les bouchons restent en place sur l'axe. Pour cela, des joints toriques peuvent être placés dans une gorge ménagée dans l'alésage intérieur du bouchon ou bien sur l'axe traversant du moyeu. Le document WO 2007/135259 montre en figure 7 un moyeu dont les bouchons d'axe sont insérés à l'intérieur de l'axe et sont équipés de joints toriques. Le document EP 1 121 255 A1 montre un bouchon bloqué par un joint torique sur l'axe du moyeu.

Toutes les solutions de l'art antérieur ne sont pas pleinement satisfaisantes, notamment d'un point de vue industriel. Un des inconvénients majeur de ces solutions réside dans la difficile reproductibilité de la force de rétention du bouchon sur ou dans l'arbre. En effet, comme cette force de rétention est directement corrélée à la relation entre les diamètres respectifs du bouchon et de l'arbre, toute variation de ces diamètres occasionnera des variations de cette force de rétention. En pratique, bien que les tolérances de fabrication soient précises et respectées dans la fabrication de l'arbre et dans celle du bouchon, il n'est pas rare que lors du montage, opérateur se trouve confronté à ne pas pouvoir mettre en place le bouchon sur l'arbre. A l'opposé, un assemblage trop lâche conduira à des risques de voir le bouchon se désolidariser trop facilement de l'arbre.

L'objectif de l'invention est de remédier aux inconvénients de l'art antérieur. En particulier, l'objectif de l'invention est de simplifier le montage des moyeux pour le fabricant, mais également d'en faciliter le démontage et le remontage par les techniciens où les utilisateurs à des fins d'entretien. Enfin, l'objectif de l'invention est d'éviter toute désolidarisation et toute perte de bouchon lorsque la roue n'est pas fixée au cadre du cycle.

Les objectifs de l'invention sont atteints par la fourniture d'un moyeu pour roue prévu pour être fixé à un élément de cadre d'un cycle comportant un arbre central autour duquel est monté rotatif un corps de moyeu et au moins un capuchon placé à l'extrémité dudit arbre, ledit capuchon comportant une première paroi cylindrique destinée à venir se glisser contre une deuxième paroi cylindrique ménagée sur l'arbre, une surface annulaire intérieure et une surface annulaire extérieure étant définies sur le capuchon et l'arbre, de manière à ménager un espace radial entre elles, ledit moyeu comportant en outre un élément de rétention du capuchon sur l'arbre placé dans ledit espace radial, ledit élément de rétention étant constitué par une épingle métallique dont au moins une portion est en appui simultané et essentiellement ponctuel sur l'arbre central et le capuchon.

De préférence, ladite au moins une portion de l'épingle est en appui au niveau de ses deux extrémités sur la surface annulaire extérieure et en contact avec la surface intérieure au niveau d'une zone intermédiaire placée entre lesdites deux extrémités.

Dans un mode de réalisation préféré de l'invention, l'épingle a un profil de forme polygonale. Dans un autre mode de réalisation de l'invention, l'épingle a une forme en U.

Dans un mode de réalisation préféré, l'élément de rétention a un profil comportant au moins six sections droites. Par exemple, dans un mode de réalisation de l'invention, l'élément de rétention a un profil de forme octogonale.

Dans un mode de réalisation préféré, la première surface cylindrique est interne, la deuxième surface cylindrique est externe et en ce que le capuchon est glissé à l'extérieur de l'arbre. Dans un autre mode de réalisation, la première surface cylindrique est externe, la deuxième surface cylindrique est interne et en ce que le capuchon est glissé à l'intérieur de l'arbre.

De préférence, l'épingle est réalisée dans du fil acier de section inférieure à 1 mm, de préférence inférieur à 0,8 mm.

Dans un mode de réalisation préféré, la surface annulaire extérieure est réalisée au fond d'une gorge ménagée dans le capuchon. Dans un autre mode de réalisation, la surface annulaire intérieure est réalisée au fond d'une gorge ménagée dans le capuchon.

La présente invention sera mieux comprise à la lecture de la description auquelle est jointe le dessin comprenant les figures suivantes :
- la figure 1 est une vue en coupe d'un moyeu selon un premier mode de réalisation de l'invention,
- la figure 2 est une vue en perspective du capuchon selon le premier mode de réalisation de l'invention,
- la figure 3 est une vue de face de l'élément de rétention selon le premier mode de réalisation de l'invention,
- la figure 4 est une section partielle du moyeu au droit de l'élément de rétention,
- la figure 5 est une vue en coupe d'un moyeu selon un deuxième mode de réalisation de l'invention,
- la figure 6 est une vue en coupe partielle d'un moyeu selon un troisième mode de réalisation de l'invention,
- la figure 7 est une vue en perspective éclatée selon un quatrième mode de réalisation de l'invention,
- la figure 8 est une vue en perspective éclatée selon un cinquième mode de réalisation de l'invention.

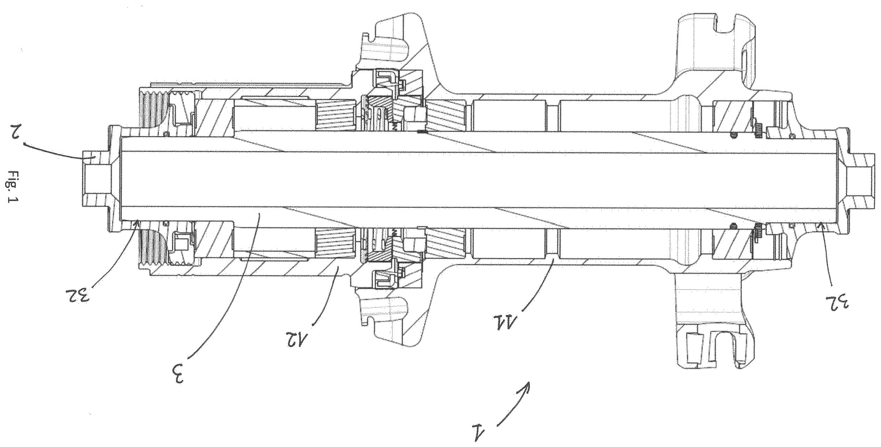

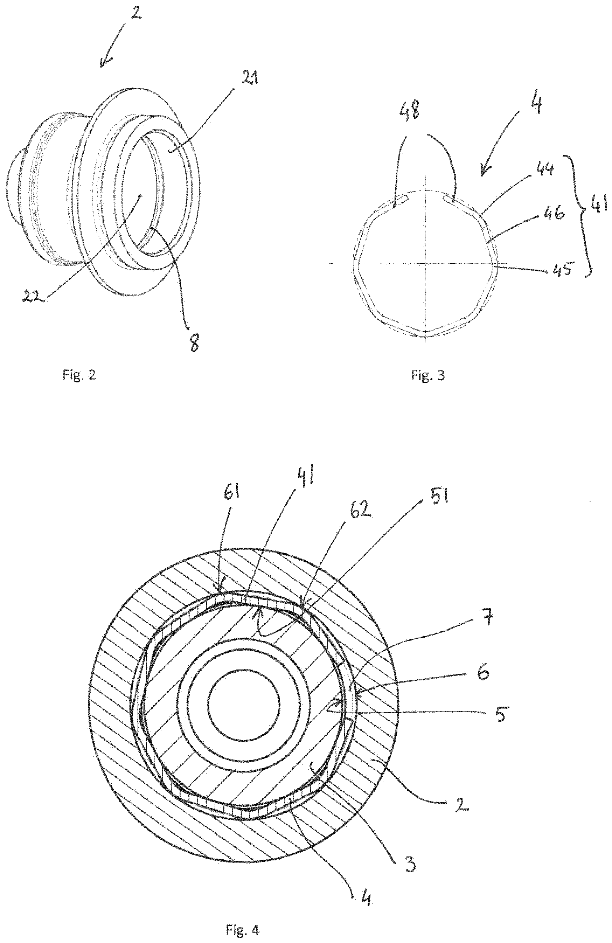

Les figures 1 à 4 montrent un moyeu selon un premier mode de réalisation de l'invention. Il s'agit d'un moyeu de roue arrière. Bien entendu, l'invention s'applique indistinctement pour les roues avant et les roues arrière de cycle.

De manière connue, le moyeu comprend un arbre central 3 autour duquel est monté rotatif le corps de moyeu 11 et le corps de roue libre 12. Chacune des extrémités de l'arbre 3 comporte une deuxième paroi cylindrique 32 contre laquelle vient se glisser une première paroi cylindrique 21 ménagée sur le capuchon 2. Le capuchon 2 est une pièce de révolution qui comporte une face frontale 23 et un embout 24 destinés à venir en contact avec des surfaces complémentaires ménagées sur la fourche ou sur le cadre du cycle.

Dans ce premier mode de réalisation de l'invention, le capuchon 2 est glissé sur l'arbre 3, la première paroi cylindrique 21 correspond à la surface interne de l'alésage 22 qui est ménagé dans le capuchon 2 et la deuxième paroi cylindrique 32 correspond à la surface externe de l'extrémité de l'arbre 3.

L'élément de rétention 4 est logé dans l'espace radial 7 défini entre une surface annulaire extérieure 6 ménagée sur le capuchon 2 et une surface annulaire intérieure 5 ménagée sur l'arbre 3. Dans ce premier mode de réalisation, l'espace radial 7 est constitué par une gorge 8 ménagée dans le capuchon 2.

Conformément à l'invention, l'élément de rétention 4 comporte plusieurs portions 41 dont chacune des extrémités 44 et 45 est en appui contre la surface annulaire extérieure 6, définissant un premier et un deuxième contact d'extrémité 61 et 62. Une zone centrale 46 de la portion 41 de l'élément de rétention 4 est, elle, en contact avec la surface annulaire intérieure 5 définissant un contact intermédiaire 51.

L'élément de rétention 4 est dimensionné de manière à ce que lorsque ce dernier est en place, chacune des portions 41 qui le constitue se trouve en contact avec le capuchon 2 et avec l'arbre 3.

Avantageusement, l'élément de rétention 4 se présente sous la forme d'une épingle métallique ouverte dont le profil est polygonal.

Le choix d'un profil polygonal donne la possibilité d'avoir une pluralité de sections sensiblement droites dont la majorité d'entre elles définit une portion 41 d'élément de rétention telle que définie ci-dessus. Le caractère « ouvert » de l'épingle métallique permet notamment de rendre possible sa mise en place dans l'espace radial 7.

Dans le mode de réalisation présenté ici, le profil de l'épingle est celui d'un octogone. L'élément de rétention 4 présente alors six portions 41 adjacentes les unes avec les autres et deux segments d'extrémités 48. Ainsi, l'élément de rétention 4 est en contact à huit endroits distincts sur l'arbre 3 (un contact pour chacune des six portions 41 et un contact pour les deux segments d'extrémité) tandis qu'il prend appui en sept endroits distincts contre la surface annulaire extérieure 6 du capuchon 2 (ensemble des contacts d'extrémités 61, 62 des six portions 41 adjacentes). Cette multiplication des contacts d'extrémités 61, 62 sur le capuchon ainsi que les contacts intermédiaires 51 sur l'arbre 3 permet de mieux répartir la force de rétention du capuchon sur l'arbre qui est répartie sur toute la périphérie de l'arbre 3. En effet, la force de rétention globale correspond à la somme des forces partielles générées par chacune des portions 41.

La force de rétention partielle au niveau de chaque portion 41 est générée par la déformation par flexion de ladite portion, cette déformation résultant de l'appui simultané de l'épingle sur l'arbre 3 et le capuchon 2.

Avantageusement, cette configuration polygonale permet de réaliser l'élément de rétention à partir d'un fil métallique de faible diamètre, et par conséquent de poids faible, tout en garantissant une force de rétention satisfaisante. En pratique, on pourra se contenter d'utiliser un fil de diamètre inférieur à 1 mm, de préférence inférieur à 0,8 mm. Dans le premier mode de réalisation de l'invention, l'élément de rétention est réalisé à partir d'un fil en acier de 0,6 mm de diamètre.

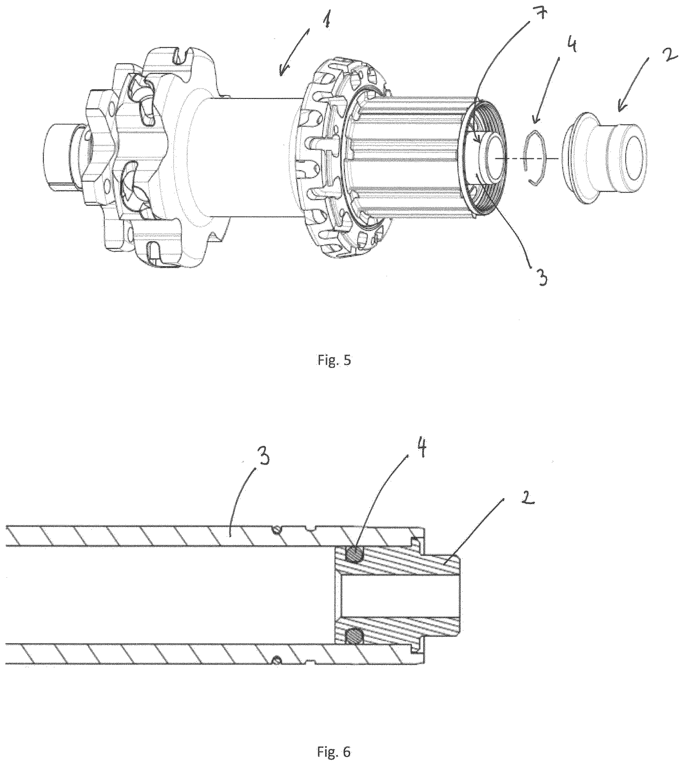

La figure 5 est une vue en coupe d'un deuxième mode de réalisation de l'invention. Il s'agit en fait d'une variante du premier mode de réalisation de l'invention qui se différencie de celui-ci par la disposition de l'espace radial 7. En effet, dans cette réalisation, l'espace radial 7 est constitué par une gorge ménagée dans l'arbre 3. L'élément de rétention 4 est similaire à celui décrit ci-dessus, c'est-à-dire qu'il est constitué par une épingle métallique ouverte dont le profil est octogonal.

L'élément de rétention 4 comprend six portions sensiblement droites dont chacune des extrémités est en appui contre la paroi cylindrique de l'alésage ménagé à l'intérieur du capuchon 2 et dont une zone centrale est en contact avec l'arbre 3.

La figure 6 décrit partiellement un troisième mode de réalisation de l'invention. On notera que seul l'arbre 3 et le capuchon 2 du moyeu sont représentés. Le reste des pièces composant le moyeu sont identiques à celles décrites pour les deux modes de réalisation précédents. A la différence des deux modes de réalisation précédents, le capuchon 2 est inséré à l'intérieur de l'arbre 3. La première paroi cylindrique du capuchon 2 correspond à une surface externe de celui-ci. Elle est au contact de la deuxième surface cylindrique de l'arbre 3, laquelle correspond à la surface interne de l'arbre. L'élément de rétention 4 est placé dans une gorge ménagée dans le capuchon.

L'élément de rétention 4 se présente sous la forme d'une épingle métallique de profil polygonal dont chacune des portions prend appui simultanément sur l'arbre 3 et sur le capuchon 2.

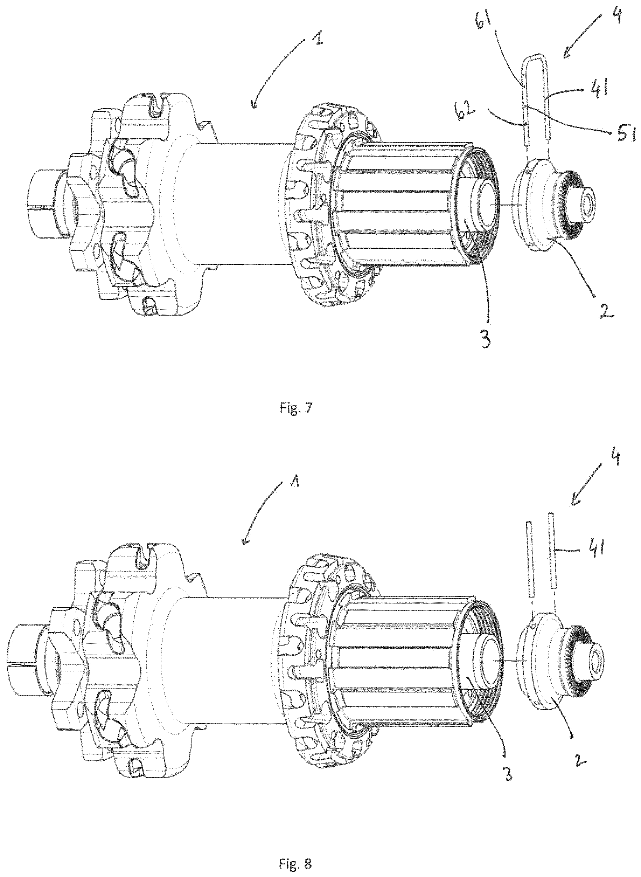

La figure 7 montre une vue en perspective d'un moyeu selon un quatrième mode de réalisation de l'invention. L'élément de rétention se présente sous la forme d'une épingle métallique de forme polygonale comportant deux portions 41 parallèles entre elles. Chacune des deux portions 41 est insérée dans un espace radial ménagé entre le capuchon 2 et l'arbre 3 de telle sorte que les deux extrémités de ladite portion prennent appui sur le capuchon 2 au niveau des deux contacts d'extrémités 61 et 62 tandis qu'une zone centrale de la portion 41 est en appui sur l'arbre 3 au niveau d'un contact intermédiaire 51.

La figure 8 montre une vue en perspective d'un moyeu selon un cinquième mode de réalisation de l'invention. Il s'agit d'une variante du mode précédent dans lequel l'élément de rétention 4 est constitué par deux tiges métalliques distinctes.

L'invention ne se limite pas aux quelques modes de réalisation présentés ici à titre d'exemple.

### NOMENCLATURE

1- Moyeu
   11- Corps de moyeu
   12- Corps de roue libre
2- Capuchon
   21- Première paroi cylindrique
   22- Alésage
3- Arbre
   32- Deuxième paroi cylindrique
4- Elément de rétention
   41- Portion d'élément de rétention
   44- Extrémité portion d'élément de rétention
   45- Extrémité portion d'élément de rétention
   46- Zone centrale de la portion d'élément de rétention
   48- Segments d'extrémité
5- Surface annulaire intérieure
   51- Contact intermédiaire
6- Surface annulaire extérieure
   61-1^{er} contact d'extrémité
   62- 2^{ème} contact d'extrémité
7- Espace radial
8- Gorge

## Revendications

1. Moyeu (1) pour roue prévu pour être fixé à un élément de cadre d'un cycle comportant un arbre central (3) autour duquel est monté rotatif un corps de moyeu (11) et au moins un capuchon (2) placé à l'extrémité dudit arbre, ledit capuchon (2) comportant une première paroi cylindrique (21) destinée à venir se glisser contre une deuxième paroi cylindrique (32) ménagée sur l'arbre (3), une surface annulaire intérieure (5) et une surface annulaire extérieure (6) étant définies sur le capuchon (2) et l'arbre (3), de manière à ménager un espace radial (7) entre elles, ledit moyeu (1) comportant en outre un élément de rétention (4) du capuchon (2) sur l'arbre (3) placé dans ledit espace radial (7), ledit élément de rétention (4) ayant au moins une portion qui est en appui simultané (ponctuel) sur l'arbre central et le capuchon,
**caractérisé en ce que** ledit élément de rétention (4) est constitué par une épingle métallique.

2. Moyeu (1) selon la revendication 1, **caractérisé en ce que** ladite au moins une portion de l'épingle est en appui (ponctuel) au niveau de ses deux extrémités sur la surface annulaire extérieure (6) et en contact avec la surface intérieure au niveau d'une zone intermédiaire placée entre lesdites deux extrémités.

3. Moyeu (1) selon la revendication 1, **caractérisé en ce que** l'épingle a un profil de forme polygonal.

4. Moyeu (1) selon la revendication 1, **caractérisé en ce que** l'épingle à une forme en U.

5. Moyeu (1) selon la revendication 1, **caractérisé en ce que** l'élément de rétention (4) a un profil comportant au moins six sections droites.

6. Moyeu (1) selon la revendication précédente, **caractérisé en ce que** l'élément de rétention (4) a un profil de forme octogonale.

7. Moyeu (1) selon l'une des revendications précédentes, **caractérisé en ce que** la première surface cylindrique est interne, la deuxième surface cylindrique est externe et **en ce que** le capuchon (2) est glissé à l'extérieur de l'arbre (3).

8. Moyeu (1) selon l'une des revendications précédentes, **caractérisé en ce que** la première surface cylindrique est externe, la deuxième surface cylindrique est interne et **en ce que** le capuchon (2) est glissé à l'intérieur de l'arbre (3).

9. Moyeu (1) selon l'une des revendications précédentes, **caractérisé en ce que** l'épingle est réalisée dans du fil acier de section inférieure à 1 mm, de préférence inférieur à 0,8 mm.

10. Moyeu (1) selon l'une des revendications précédentes, **caractérisé en ce que** la surface annulaire extérieure (6) est réalisée au fond d'une gorge (8) ménagée dans le capuchon (2).

11. Moyeu (1) selon l'une des revendications précédentes, **caractérisé en ce que** la surface annulaire intérieure (5) est réalisée au fond d'une gorge (8) ménagée dans le capuchon (2).

## Patentansprüche

1. Nabe (1) für ein Rad, die dafür vorgesehen ist, an einem Rahmenelement eines Fahrrads befestigt zu werden, und eine zentrale Welle (3), auf welcher ein Nabenkörper (11) drehbar gelagert ist, und wenigstens eine am Ende der Welle angeordnete Kappe (2) umfasst, wobei die Kappe (2) eine erste zylindrische Wand (21) umfasst, die dazu bestimmt ist, entlang einer auf der Welle (3) ausgebildeten zweiten zylindrischen Wand (32) zu gleiten, wobei eine innere ringförmige Fläche (5) und eine äußere ringförmige Fläche (6) an der Kappe (2) und der Welle (3) so definiert sind, dass zwischen ihnen ein radialer Zwischenraum (7) ausgebildet ist, wobei die Nabe (1) außerdem ein Element zum Halten (4) der Kappe (2) auf der Welle (3) umfasst, das in dem radialen Zwischenraum (7) angeordnet ist, wobei dieses Halteelement (4) wenigstens einen Abschnitt aufweist, welcher gleichzeitig (punktuell) an der zentralen Welle und der Kappe anliegt, **dadurch gekennzeichnet, dass** das Halteelement (4) aus einer metallischen Nadel besteht.

2. Nabe (1) nach Anspruch 1, **dadurch gekennzeichnet, dass** der wenigstens eine Abschnitt der Nadel an seinen zwei Enden (punktuell) an der äußeren ringförmigen Fläche (6) anliegt und sich an einem Zwischenbereich, der zwischen den zwei Enden angeordnet ist, in Kontakt mit der inneren Fläche befindet.

3. Nabe (1) nach Anspruch 1, **dadurch gekennzeichnet, dass** die Nadel ein Profil von polygonaler Form aufweist.

4. Nabe (1) nach Anspruch 1, **dadurch gekennzeichnet, dass** die Nadel eine U-Form aufweist.

5. Nabe (1) nach Anspruch 1, **dadurch gekennzeichnet, dass** das Halteelement (4) ein Profil aufweist, das wenigstens sechs gerade Abschnitte umfasst.

6. Nabe (1) nach dem vorhergehenden Anspruch, **dadurch gekennzeichnet, dass** das Halteelement (4) ein Profil von achteckiger Form aufweist.

7. Nabe (1) nach einem der vorhergehenden Ansprüche, **dadurch gekennzeichnet, dass** die erste zylindrische Fläche eine innere und die zweite zylindrische Fläche eine äußere Fläche ist, und dadurch, dass die Kappe (2) auf die Außenseite der Welle (3) aufgeschoben ist.

8. Nabe (1) nach einem der vorhergehenden Ansprüche, **dadurch gekennzeichnet, dass** die erste zylindrische Fläche eine äußere und die zweite zylindrische Fläche eine innere Fläche ist, und dadurch, dass die Kappe (2) ins Innere der Welle (3) eingeschoben ist.

9. Nabe (1) nach einem der vorhergehenden Ansprüche, **dadurch gekennzeichnet, dass** die Nadel aus Stahldraht mit einem Querschnitt hergestellt ist, der kleiner als 1 mm, vorzugsweise kleiner als 0,8 mm ist.

10. Nabe (1) nach einem der vorhergehenden Ansprüche, **dadurch gekennzeichnet, dass** die äußere ringförmige Fläche (6) am Boden einer Nut (8) hergestellt ist, die in der Kappe (2) ausgebildet ist.

11. Nabe (1) nach einem der vorhergehenden Ansprüche, **dadurch gekennzeichnet, dass** die innere ringförmige Fläche (5) am Boden einer Nut (8) hergestellt ist, die in der Kappe (2) ausgebildet ist.

## Claims

1. Hub (1) for a wheel, designed to be fastened to a frame element of a cycle, having a central shaft (3) about which is mounted so as to be able to rotate a hub body (11) and at least one cap (2) placed at the end of said shaft, said cap (2) having a first cylindrical wall (21) intended to slide against a second cylindrical wall (32) produced on the shaft (3), an inner annular surface (5) and an outer annular surface (6) being defined on the cap (2) and the shaft (3), so as to produce a radial space (7) between them, said hub (1) also having an element (4) for retaining the cap (2) on the shaft (3) that is placed in said radial space (7), said retention element (4) having at least one portion that bears simultaneously (with point contact) on the central shaft and the cap,
**characterized in that** the retention element (4) is constituted by a metal pin.

2. Hub (1) according to Claim 1, **characterized in that** said at least one portion of the pin bears (with point contact) at its two ends on the outer annular surface (6) and is in contact with the inner surface at an intermediate zone placed between said two ends.

3. Hub (1) according to Claim 1, **characterized in that** the pin has a profile of polygonal shape.

4. Hub (1) according to Claim 1, **characterized in that** the pin has a U shape.

5. Hub (1) according to Claim 1, **characterized in that** the retention element (4) has a profile having at least six straight sections.

6. Hub (1) according to the preceding claim, **characterized in that** the retention element (4) has a profile of octagonal shape.

7. Hub (1) according to one of the preceding claims, **characterized in that** the first cylindrical surface is internal, the second cylindrical surface is external and **in that** the cap (2) is slid on the outside of the shaft (3) .

8. Hub (1) according to one of the preceding claims, **characterized in that** the first cylindrical surface is external, the second cylindrical surface is internal and **in that** the cap (2) is slid on the inside of the shaft (3) .

9. Hub (1) according to one of the preceding claims, **characterized in that** the pin is made of steel wire of section smaller than 1 mm, preferably smaller than 0.8 mm.

10. Hub (1) according to one of the preceding claims, **characterized in that** the outer annular surface (6) is realized at the bottom of a groove (8) produced in the cap (2).

11. Hub (1) according to one of the preceding claims, **characterized in that** the inner annular surface (5) is realized at the bottom of a groove (8) produced in the cap (2).
